# EUROPEAN PATENT SPECIFICATION

(11) **EP 3 594 465 B1**
(45) Date of publication and mention of the grant of the patent: **25.08.2021**
(21) Application number: 19185705.1
(22) Date of filing: 11.07.2019
(51) Int. Cl.: F01N 13/18, F01N 13/00, F01N 3/021, F01N 3/023

(54) **MOUNTING STRUCTURE OF EXHAUST GAS CLEANING APPARATUS**
MONTAGESTRUKTUR EINER ABGASREINIGUNGSVORRICHTUNG
STRUCTURE DE MONTAGE D'UN APPAREIL DE NETTOYAGE DE GAZ D'ÉCHAPPEMENT

(30) Priority: 12.07.2018 JP 2018132066
(43) Date of publication of application: 15.01.2020
(73) Proprietor: KABUSHIKI KAISHA TOYOTA JIDOSHOKKI, Kariya-shi, Aichi-ken 448-8671 (JP)
(72) Inventor: Ota, Yuhei, Aichi-ken, 448-8671 (JP); Watanabe, Takahiro, Aichi-ken, 448-8671 (JP); Motoyama, Yuto, Aichi-ken, 448-8671 (JP)
(74) Representative: Hoffmann Eitle

(56) References cited:
- WO-A1-2014/168072
- JP-A- 2005 016 374
- JP-A- 2010 019 188
- JP-A- 2012 106 836
- JP-A- 2014 122 592
- US-A1- 2010 269 494
- US-A1- 2011 120 085

## Description

### BACKGROUND ART

The present disclosure relates to a mounting structure of an exhaust gas cleaning apparatus that cleans exhaust gas discharged from an internal combustion engine.

An exhaust gas cleaning apparatus of a diesel engine has a cleaning processing member, such as a particulate matter removing filter (hereinafter, referred to as diesel particulate filter or DPF) for capturing and removing particulate matter (PM) from exhaust gas. Since the DPFs that clean exhaust gas are designed to capture PM in the exhaust gas, the DPFs require periodical cleaning to rinse and remove the PM that are captured and deposited on the DPFs. In view of this, various techniques for the mounting structure of the exhaust gas cleaning apparatus have been proposed in order to enhance the workability in cleaning the DPFs.

For example, according to the mounting structure of a diesel particulate filter for an industrial vehicle disclosed in Japanese Patent Application Publication No. 2012-106836, an opening is formed through an upper panel of a counterweight at an intermediate position thereof in a vehicle width direction. Within the counterweight, a DPF is fixed to a pair of bases extending in the vehicle width direction with bolts at a position offset toward either side in the vehicle width direction relative to the opening. The size of the opening is designed so that the DPF can pass through the opening in the vertical direction. A lid member for opening and closing the opening is removably mounted to the opening with bolts or the like.

Before cleaning the DPF, a worker removes the lid member and untightens the bolts fixing the DPF. The worker then hangs and lifts the DPF a little using a crane etc. to move the DPF immediately under the opening. The worker further lifts the DPF so that the DPF is lifted to the outside of the vehicle through the opening and placed on the ground.

Subsequently, after the DPF has been cleaned, the worker hangs and lifts the clean DPF using a crane etc. again to install the DPF in the counterweight through the opening. Then the worker moves the DPF to the aforementioned offset position in the vehicle width direction and fixes the DPF to the pair of bases with bolts. Then, the worker attaches the lid member to the opening to end the cleaning operation.

According to the mounting structure of the DPF for an industrial vehicle disclosed in the Publication, however, prior to the cleaning operation on the DPF, the DPF needs to be hang and taken out to the outside of the vehicle through the opening using a crane etc. and then placed on the ground. After the cleaning operation, the DPF needs to be lifted again using a crane etc. to install the DPF in the counterweight through the opening. In this way, the DPF cleaning operation that requires equipment, such as a crane, is difficult to be handled by users or customers themselves. Thus, the users or customers have to leave the DPF at a dealer or the like. As a result, the whole time required for cleaning the DPF is extended, lowering the operation rate of the industrial vehicle.

US-A1-2011/0120085 describes an exhaust gas treatment device in which an engaging groove with which a gasket is engaged is provided in each of a front side projecting portion and a rear side projecting portion formed in a filter accommodating cylinder to be positioned on an outer peripheral surface of each projecting portion.

JP-A-2010 019188 describes an exhaust emission purification device which has a first U-bolt for fixing a first muffler divided portion and a second U-bolt for fixing a second muffler divided portion. The first muffler divided portion is provided with a first guide groove into which a first protrusion of a post-treatment filter is guided. The second muffler divided portion has a second guide groove into which a second protrusion of the post-treatment filter is guided.

### SUMMARY

The present invention has been made in view of the above circumstances and is directed to providing an exhaust gas cleaning apparatus, comprising a mounting structure, for an industrial vehicle that reduces the time required for cleaning the exhaust gas cleaning apparatus.

In accordance with an aspect of the present invention, there is provided an exhaust gas cleaning apparatus as recited in claim 1, comprising a mounting structure.

Other aspects and advantages of the disclosure will become apparent from the following description, taken in conjunction with the accompanying drawings, illustrating by way of example the principles of the disclosure.

### BRIEF DESCRIPTION OF THE DRAWINGS

The disclosure, together with objects and advantages thereof, may best be understood by reference to the following description of the embodiments together with the accompanying drawings in which:
FIG. 1 is a side view illustrating an example of a forklift truck that includes an exhaust gas cleaning apparatus according to a first embodiment of the present disclosure;
FIG. 2 is a cross-sectional side view of a main part of the forklift truck showing the exhaust gas cleaning apparatus disposed in a counterweight;
FIG. 3 is a plan view illustrating an opening from which a lid member has been removed;
FIG. 4 is a plan view of the exhaust gas cleaning apparatus as viewed from the upper side of the vehicle;
FIG. 5 is a plan view of the exhaust gas cleaning apparatus as viewed from the rear side of the vehicle;
FIG. 6 is an enlarged view of a main part of a mounting base;
FIG. 7 is an exploded perspective view of the exhaust gas cleaning apparatus;
FIG. 8 is a cross-sectional view of a main part of the forklift truck to which a clamping member is mounted;
FIG. 9 is an explanatory view describing removal of a cleaning cylinder from an upstream cylinder and a downstream cylinder;
FIG. 10 is a view describing a movement of the mounting base illustrated in FIG. 9;
FIG. 11 is an explanatory view describing installation of the cleaning cylinder to the upstream cylinder and the downstream cylinder;
FIG. 12 is a view describing a movement of the mounting base illustrated in FIG. 11;
FIG. 13 is a side view illustrating an example of a forklift truck that includes an exhaust gas cleaning apparatus according to a second embodiment of the present disclosure;
FIG. 14 is a front view illustrating a rear opening formed on a rear part of a forklift truck illustrated in FIG. 13;
FIG. 15 is a cross-sectional side view of a main part of the forklift truck showing the exhaust gas cleaning apparatus disposed in a counterweight;
FIG. 16 is a front view of the exhaust gas cleaning apparatus as viewed from the rear side of the vehicle;
FIG. 17 is an exploded perspective view of the exhaust gas cleaning apparatus;
FIG. 18 is an explanatory view describing installation of the cleaning cylinder to the upstream cylinder and the downstream cylinder;
FIG. 19 is a view describing a movement of a second mounting base illustrated in FIG. 18;
FIG. 20 is an explanatory view describing removal of a cleaning cylinder from an upstream cylinder and a downstream cylinder; and
FIG. 21 is a view describing a movement of a second mounting base illustrated in FIG. 20.

### DETAILED DESCRIPTION OF THE EMBODIMENTS

### First Embodiment

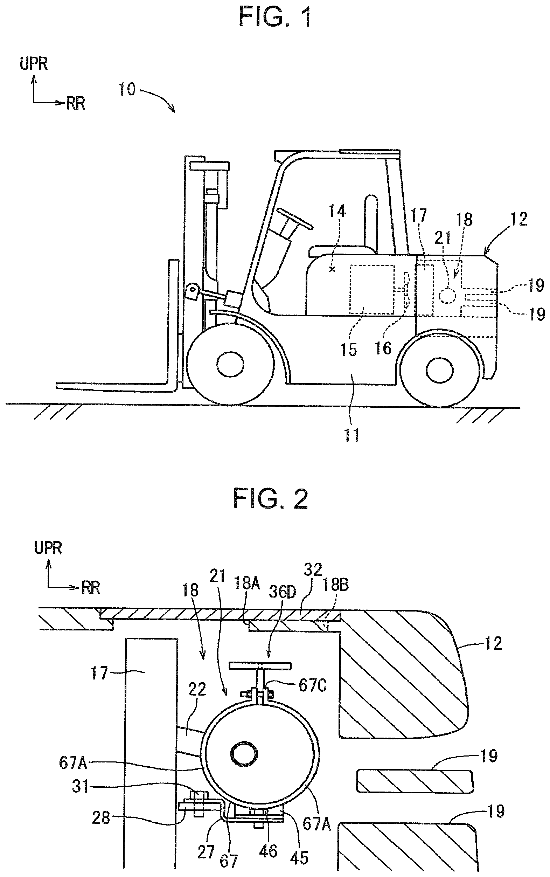

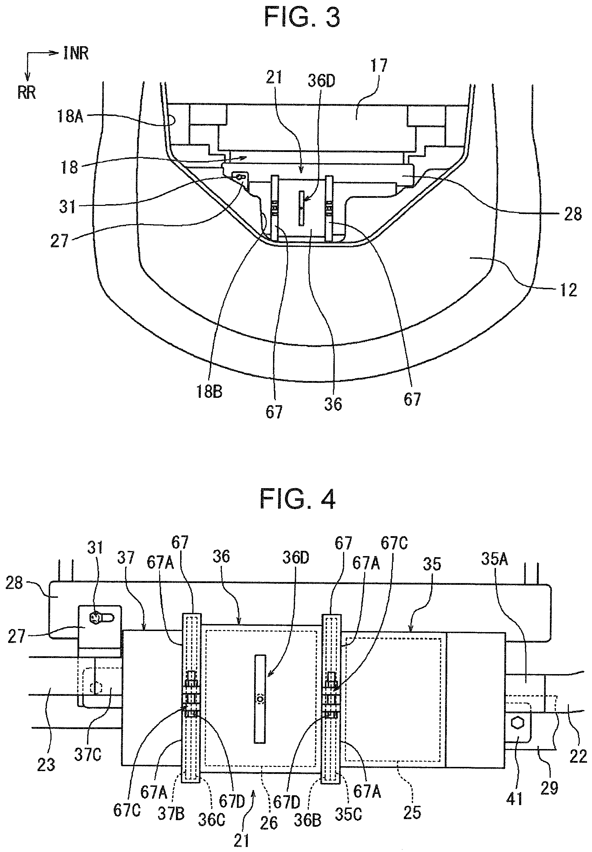

The following will describe first and second embodiments of the present disclosure in each of which a mounting structure of an exhaust gas cleaning apparatus of the present disclosure is applied to a forklift truck. First, an overall structure of a forklift truck 10 according to the first embodiment of the present disclosure will be described with reference to FIGS. 1 to 3. Arrows RR and UPR indicated in FIGS. 1 and 2 show the rear side and the upper side of the vehicle, respectively. Arrow INR indicated in FIG. 3 shows the inner side of the vehicle in the vehicle width direction.

As illustrated in FIG. 1, the forklift truck 10 includes a vehicle body 11 and a counterweight 12 which is mounted to a rear part of the vehicle body 11. An engine 15 is installed in an engine compartment 14 of the vehicle body 11. The engine 15 is configured by a diesel engine, for example. The engine compartment 14 has in a side wall thereof an outside air intake port (not illustrated). A fan 16 which is driven or rotated by the engine 15 is provided to the rear side of the engine 15.

A radiator 17 configured to cool the coolant water of the engine 15 is disposed on the rear side of the fan 16. The fan 16 is driven by the engine 15 to take outside air (air) into the engine compartment 14 through the outside air intake port and then blow the air onto the radiator 17. With this operation, the coolant water of the engine 15 is cooled. The air blown onto the radiator 17 flows through a ventilation chamber 18, which is a substantially box-shaped chamber having an open front side and is formed on the rear side of the radiator 17, and then is blown toward the rear side of the vehicle through a pair of rear air outlet ports 19 formed through a rear wall portion of the counterweight 12 in the longitudinal direction of the vehicle body 11. For example, the rear air outlet ports 19 extending through the rear wall portion of the counterweight 12 are each formed to have a rectangular cross section which is longer in the vehicle width direction, and are arranged in the vertical direction in the rear wall portion of the counterweight 12 such that the upper and lower rear air outlet ports 19 are parallel to each other.

Further, in the ventilation chamber 18, an exhaust gas cleaning apparatus 21 is disposed on the rear side of the radiator 17 so as to extend along the vehicle width direction, and an exhaust pipe 22 that forms part of an exhaust gas passage through which exhaust gas is discharged is connected to an upstream side of the exhaust gas cleaning apparatus 21, as illustrated in FIG. 2. The exhaust gas cleaning apparatus 21 is disposed within the counterweight 12. Thus, the exhaust gas cleaning apparatus 21 and the exhaust pipe 22 cooperate to form the exhaust gas passage. While the exhaust gas flows from the upstream side to the downstream side, hazardous substances contained in the exhaust gas are removed.

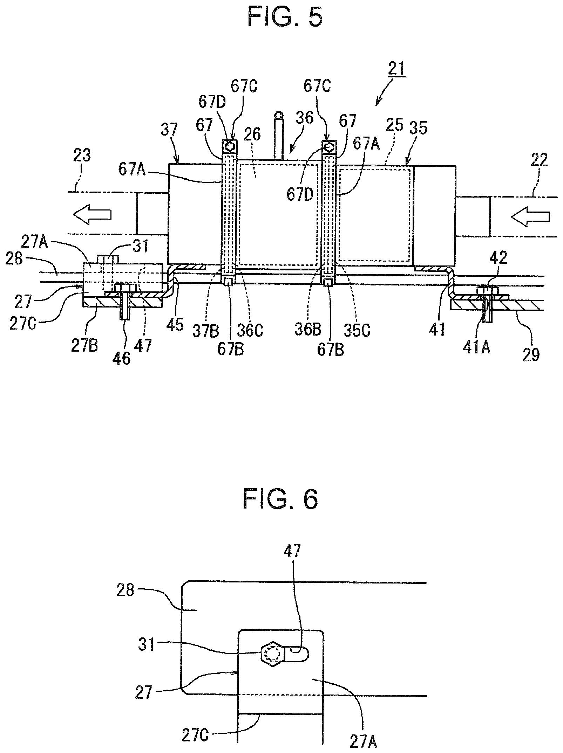

It is to be noted that, although the engine 15 is high-efficient and superior in the durability, hazardous substances, such as particulate matter (PM), nitrogen oxide (NOx), carbon monoxide (CO), and hydrocarbon (HC), may be discharged with the exhaust gas. In view of this, the exhaust gas cleaning apparatus 21 connected to the exhaust pipe 22 is configured to include an oxidation catalyst (diesel oxidation catalyst or DOC) 25 (see FIGS. 4 and 5) on the upstream side thereof and a diesel particulate filter (DPF) 26 as the cleaning processing member on the downstream side thereof (see FIGS. 4 and 5), as will be described later in detail. The DOC 25 combusts and removes nitrogen oxide (NOx), carbon monoxide (CO), hydrocarbon (HC) etc. The DPF 26 is configured to capture and remove particulate matter (PM).

As illustrated in FIGS. 2 and 3, the downstream lower end portion of the exhaust gas cleaning apparatus 21 is connected to a mounting base (the mounting base member) 27 which is attached along the vehicle longitudinal direction and bent in a crank shape in a side view. Further, a plate-like base 28 having a rectangular shape in a plan view is disposed so as to extend along the vehicle width direction in the ventilation chamber 18. The mounting base 27 is detachably fixed onto the base 28 with bolts 31. Further, the lower end portion of the exhaust gas cleaning apparatus 21 is connected to a mounting bracket 29 (see FIGS. 4 and 5) that extends inward in the vehicle width direction from a side wall of the ventilation chamber 18.

Further, as illustrated in FIGS. 2 and 3, the ventilation chamber 18 has in the top portion thereof an opening 18A which has a substantially rectangular shape that is longer in the vehicle width direction in a plan view. Thus, the upper side of the ventilation chamber 18 is open at the opening 18A. As illustrated in FIG. 3, the vehicle body 11 has a cutout port 18B formed at the substantially intermediate position in the vehicle width direction and at the peripheral edge of the opening 18A at the rear side of the vehicle. The cutout port 18B is cut out in a U-shape in a plan view curved toward the rear side of the vehicle. The cutout port 18B having a U-shape in a plan view is located immediately above the cleaning cylinder 36 and the pair of clamping members 67 disposed substantially at an intermediate position in an axial direction of the exhaust gas cleaning apparatus 21. Further, the cutout port 18B formed in a U-shape has a width that is a little greater than a distance between the clamping members 67 and located in the rear side of the vehicle such that part of the edge of the cutout port 18B faces an end portion of the cleaning cylinder 36 at the rear side of the vehicle.

The opening 18A and the cutout port 18B is closed by a plate-like lid member 32 having a substantially rectangular shape that is longer in the vehicle width direction in a plan view. The lid member 32 is placed on the opening 18A and the cutout port 18B and fixed with bolts or the like. This configuration permits a worker to remove and install the cleaning cylinder 36 of the exhaust gas cleaning apparatus 21 through the cutout port 18B, by removing the lid member 32.

Next, the configuration of the exhaust gas cleaning apparatus 21 will be described with reference to FIGS. 4 to 12. As illustrated in FIGS. 4 to 7, the exhaust gas cleaning apparatus 21 includes an upstream cylinder 35 disposed on the upstream side, a downstream cylinder 37 disposed on the downstream side of the upstream cylinder 35, and a cleaning cylinder 36 that is removably serially connected between and coaxially with the upstream cylinder 35 and the downstream cylinder 37. An oxidation catalyst 25 is accommodated in the upstream cylinder 35, and a DPF 26 is accommodated in the cleaning cylinder 36. The DPF 26 is configured to pass exhaust gas therethrough to clean the exhaust gas.

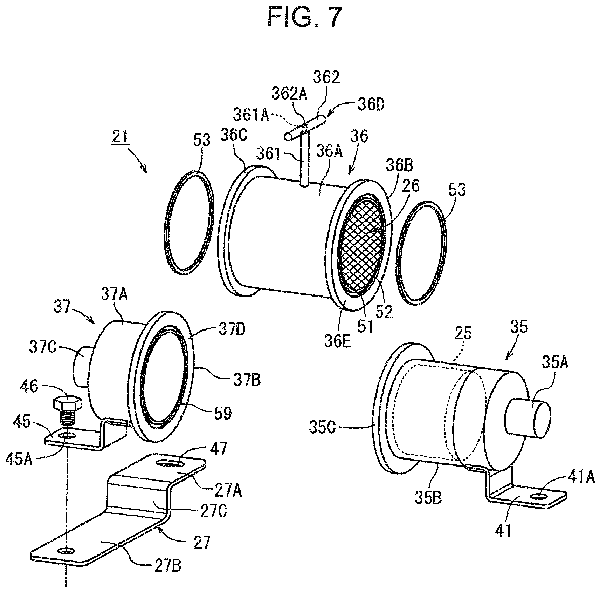

As illustrated in FIG. 7, the upstream cylinder 35 includes an introducing cylinder portion 35A through which exhaust gas is introduced, a cylinder portion 35B, a flange portion 35C, and the oxidation catalyst 25 accommodated in the cylinder portion 35B. The introducing cylinder portion 35A is formed in a cylinder having a circular cross section, and an end of the introducing cylinder portion 35A on the upstream side is connected with the exhaust pipe 22 (see FIGS. 4 and 5). The cylinder portion 35B is formed in a circular cylinder, and an upstream end of the cylinder portion 35B is closed. The cylinder portion 35B has at a substantially intermediate position thereof a through hole having the substantially same diameter as that of the introducing cylinder portion 35A. The whole circumference of a downstream end of the introducing cylinder portion 35A is connected by welding or the like to an outer end of the through hole in the axial direction. The cylinder portion 35B is fitted such that the substantially cylindrical oxidation catalyst 25 is located on the downstream side in the cylinder portion 35B.

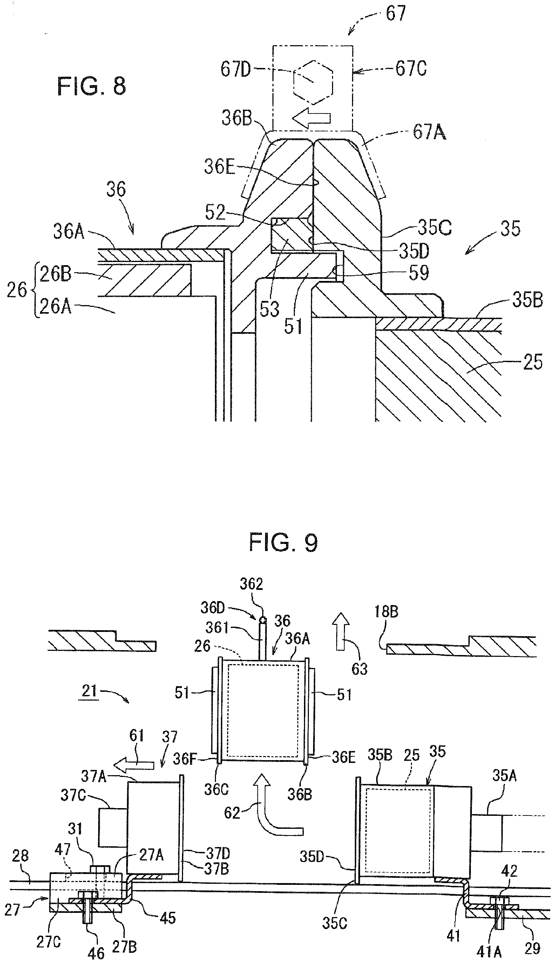

The whole circumference of the flange portion 35C is connected by welding or the like to the downstream end of the cylinder portion 35B so that the flange portion 35C has a shape of a collar (see FIG. 8). As illustrated in FIG. 8, a connecting surface 35D which is the downstream end face of the flange portion 35C is formed in an annular flat face, and is positioned orthogonal to the axial direction. The connecting surface 35D is contacted with and connected to an upstream flange portion 36B of the cleaning cylinder 36 (see FIGS. 4 and 5).

The oxidation catalyst 25 is formed of a ceramic cellular cylinder body having an outer diameter that is substantially the same as the inner diameter of the cylinder portion 35B. The oxidation catalyst 25 has a number of through holes extending in the axial direction. The inner surface of the oxidation catalyst 25 is coated with a precious metal, such as platinum (Pt). Exhaust gas at a specified temperature is flowed through the through holes of the oxidation catalyst 25 to oxide and remove nitrogen oxide (NOx), carbon monoxide (CO), hydrocarbon (HC), etc. contained in the exhaust gas.

As illustrated in FIGS. 5 and 7, the upstream cylinder 35 having the above-described configuration includes a plate-like support member (the first support member) 41 bent in a crank shape in a side view at the bottom side of the cylinder portion 35B. The support member 41 is configured to support the upstream cylinder 35. An upper end face of the support member 41 is fixed by welding, etc. to the bottom side of the cylinder portion 35B so that the lower end portion of the support member 41 is located under the introducing cylinder portion 35A. The support member 41 has a through hole 41A formed in the lower end portion thereof. The support member 41 is placed on the upper surface of the mounting bracket 29 and fixed with a bolt 42 inserted through the through hole 41A. In this way, the upstream cylinder 35 is fixed onto the mounting bracket 29 that is attached to the vehicle body via the support member 41.

As illustrated in FIG. 7, the downstream cylinder 37 includes a cylinder portion 37A, a flange portion 37B, and a discharge cylinder portion 37C through which exhaust gas is discharged. The exhaust gas that has passed through the DPF 26 accommodated in the cleaning cylinder 36 is introduced into the cylinder portion 37A. The outer diameter of the cylinder portion 37A is substantially the same as that of the cylinder portion 35B of the upstream cylinder 35, and the axial length of the cylinder portion 37A is smaller than that of the cylinder portion 35B. For example, the cylinder portion 37A is formed in a cylinder that is half as long as the cylinder portion 35B. A downstream end of the cylinder portion 37A is closed. The cylinder portion 37A has at the substantially center thereof a through hole having the substantially same diameter as that of the discharge cylinder portion 37C. The whole circumference of an upstream end of the discharge cylinder portion 37C is connected by welding etc. to an outer end of the through hole in the axial direction. The discharge cylinder portion 37C is formed in a cylinder having a circular cross section, and the downstream end of the discharge cylinder portion 37C is connected with an exhaust pipe 23 (see FIGS. 4 and 5).

The whole circumference of the flange portion 37B is connected by welding or the like to the upstream end portion of the cylinder portion 37A so that the flange portion 37B has a shape of a collar. The flange portion 37B is plane-symmetrical with the flange portion 35C of the upstream cylinder 35. Thus, a connecting surface 37D which is the upstream end face of the flange portion 37B is formed in an annular flat face, and is positioned orthogonal to the axial direction. The connecting surface 37D is contacted with and connected to a downstream flange portion 36C of the cleaning cylinder 36 (see FIGS. 4 and 5).

As illustrated in FIGS. 5 and 7, the downstream cylinder 37 having the above-described configuration includes a plate-like support member (the second support member) 45 bent in a crank shape in a side view at the bottom side of the cylinder portion 37A. An upper end face of the support member 45 is fixed by welding, etc. to the bottom side of the cylinder portion 37A so that the lower end portion of the support member 45 is located on the downstream side of the cylinder portion 37A in the axial direction. The support member 45 has a through hole 45A formed in the lower end portion thereof. The support member 45 is placed on the upper surface of the lower end portion 27B of the plate-like mounting base 27 bent in a crank shape in a side view, and fixed with a bolt 46 inserted through the through hole 45A. The mounting base 27 is disposed along a direction that is orthogonal to the axial direction of the downstream cylinder 37 and to the longitudinal direction of the support member 45. In this state, the lower end portion of the support member 45 is fixed by the bolt.

The mounting base 27 fixed to the lower end portion of the support member 45 with the bolt includes an upper end portion 27A which has a long hole 47 formed to be longer in the axial direction of the downstream cylinder 37. The mounting base 27 includes a wall portion 27C extending downwardly at a substantially right angle from an edge portion of the upper end portion 27A facing the lower end portion 27B. As illustrated in FIGS. 4 and 6, the mounting base 27 is fixed to the base 28 with the bolt 31 inserted through the long hole 47, with the upper end portion 27A of the mounting base 27 placed on an upper surface of the base 28 and the wall portion 27C contacted with an end portion of the base 28 on the rear side of the vehicle.

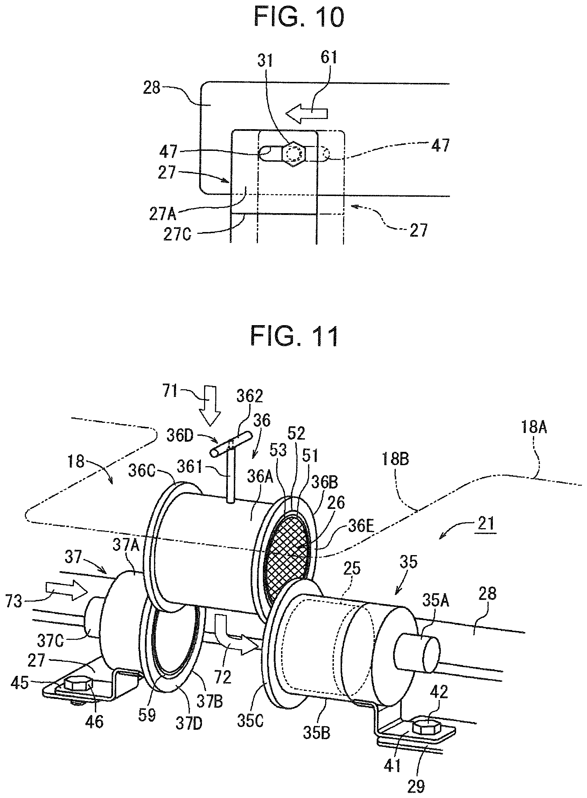

As illustrated in FIGS. 5 and 6, when the cleaning cylinder 36 is mounted between and coaxially with the upstream cylinder 35 and the downstream cylinder 37, the bolt 31 is positioned and tightened near an end of the long hole 47 opposite from the downstream cylinder 37 in the longitudinal direction of the long hole 47. As illustrated in FIGS. 9 and 10, when the cleaning cylinder 36 between the upstream cylinder 35 and the downstream cylinder 37 is detached, the bolt 31 is loosened and positioned near the other end of the long hole 47 adjacent to the downstream cylinder 37 in the longitudinal direction of the long hole 47.

Thus, the downstream cylinder 37 is movable back and forth in the axial direction for the length of the long hole 47 through the mounting base 27 fixed with bolts onto the support member 45 and the base 28, and the fixing position of the downstream cylinder 37 is adjustable within the movable range. The end of the base 28 on the rear side of the vehicle is disposed along the axial direction of the exhaust gas cleaning apparatus 21, that is, along the vehicle width direction. After the bolt 31 is loosened, by sliding the wall portion 27C of the mounting base 27 that is in contact with the end of the base 28 on the rear side of the vehicle, the downstream cylinder 37 may be moved back and forth in the axial direction easily.

As illustrated in FIGS. 7 and 9, the cleaning cylinder 36 includes a cylindrical cylinder portion 36A into which the exhaust gas that has passed through the oxidation catalyst 25 accommodated in the upstream cylinder 35, an upstream flange portion 36B, a downstream flange portion 36C, a handle 36D, and a DPF 26 accommodated in the cylinder portion 36A. The cylinder portion 36A is formed in a cylindrical shape having an outer diameter that is substantially the same as that of the cylinder portion 35B of the upstream cylinder 35. The DPF 26 formed in a substantially columnar shape is fitted in the cylinder portion 36A substantially across the entire length of the cylinder portion 36A.

The whole circumference of the upstream flange portion 36B is connected by welding or the like to the upstream end of the cylinder portion 36A so that the upstream flange portion 36B has a shape of a collar. The whole circumference of the downstream flange portion 36C is connected by welding or the like to the downstream end of the cylinder portion 36A so that the downstream flange portion 36C has a shape of a collar. The upstream flange portion 36B and the downstream flange portion 36C have the same configuration. As illustrated in FIG. 8, a connecting surface 36E which is the upstream end face of the upstream flange portion 36B is formed in an annular flat face, and is positioned orthogonal to the axial direction. The connecting surface 36E is contacted with and connected to the connecting surface 35D of the flange portion 35C of the upstream cylinder 35.

A connecting surface 36F (see FIG. 9) which is the downstream end face of the downstream flange portion 36C is formed in an annular flat face, and is positioned orthogonal to the axial direction. The connecting surface 36F is contacted with and connected to the connecting surface 37D of the flange portion 37B of the downstream cylinder 37. Further, the handle 36D having a T-shape as viewed in the axial direction is provided on an outer peripheral surface of the cylinder portion 36A at a substantially intermediate position thereof in the axial direction so that the handle 36D extends upward in the vertical direction from the outer peripheral surface of the cylinder portion 36A. The handle 36D includes a shaft portion 361 and a handle portion 362. The shaft portion 361 is located at and extends radially outward from the intermediate position of the outer peripheral surface of the cylinder portion 36A in the axial direction thereof. The shaft portion 361 has a threaded portion 361A at an end thereof. The threaded portion 361A is screwed into a threaded hole 362A of the handle portion 362 formed at an intermediate position of the handle portion 362 in the longitudinal direction thereof. The proximal end portion of the shaft portion 361 is fixed to the outer peripheral surface of the cylinder portion 36A with a screw, or by laser welding, or the like. Thus, a worker can carry the cleaning cylinder 36 by holding the handle portion 362 of the handle 36D.

As illustrated in FIG. 8, the DPF 26 includes a columnar filter body 26A formed by a porous member made of a ceramic material or the like, and a cylindrical thermal insulation member 26B formed over the whole circumference of the outer periphery of the filter body 26A. The filter body 26A has a honeycomb-structure and is a cellular cylindrical member in which a large number of small holes are formed in the axial direction. Ends of the adjacent small holes, which alternately differ from each other, are closed by a seal member. The filter body 26A captures particulate matter (PM) by allowing exhaust gas flowing into the respective small holes from the upstream side through the porous member, and allows only the exhaust gas to flow out to the downstream side through the adjacent small holes.

In this case, the particulate matter captured by the filter body 26A is periodically combusted and removed by increasing the temperature of the exhaust gas. Part of the particulate matter combusted to ash gradually accumulates in the small holes. The remaining unburnt particulate matter, such as heavy metal in the engine oil, calcium, etc. also gradually accumulates. Thus, the exhaust gas cleaning apparatus is configured so that the DPF 26 can be cleaned by removing the cleaning cylinder 36 (see FIG. 9).

As illustrated in FIGS. 7 to 9, an insertion rib portion 51 having a ring shape in a front view and extending outward in the axial direction is provided to each of the connecting surface 36E of the upstream flange portion 36B and the connecting surface 36F of the downstream flange portion 36C so that the insertion rib portion 51 are coaxial with the cylinder portion 36A. The extending dimension of each insertion rib portion 51 toward an outer side in the axial direction is substantially the same throughout the whole circumference thereof from the inner peripheral edge in the radial direction. Also, each insertion rib portion 51 has a predetermined thickness in the radial direction.

Each of the connecting surface 36E and the connecting surface 36F has a gasket insertion groove 52 extending in the whole circumferential direction along the proximal end portion of the insertion rib portion 51 in the radial direction. Each gasket insertion groove 52 is concaved inward in the axial direction and has a U-shaped cross section in the radial direction. A ring-shaped gasket 53 having a substantially rectangular cross section is inserted in each of the insertion rib portions 51, and the insertion rib portions 51 with the gaskets 53 are inserted into the respective gasket insertion grooves 52 (see FIG. 8).

As illustrated in FIGS. 7 to 9, when the cleaning cylinder 36 is disposed coaxially with and between the upstream cylinder 35 and the downstream cylinder 37, the connecting surface 35D of the flange portion 35C of the upstream cylinder 35 and the connecting surface 37D of the flange portion 37B of the downstream cylinder 37 each have an insertion groove 59 at a position corresponding to the insertion rib portion 51 and conforming to the whole circumference of the insertion rib portion 51. Each insertion groove 59 has a circular shape in a front view and a substantially U-shaped cross section and extends along the whole circumference. The depth of the respective insertion grooves 59 is determined to be substantially the same as the extending dimension of the insertion rib portions 51 from the connecting surfaces 36E, 36F of the flange portions 36B, 36C, respectively, of the cleaning cylinder 36. The width of the respective insertion grooves 59 is determined to be substantially the same as the thickness of the insertion rib portions 51 in the radial direction.

It is to be noted that the extending dimensions of the insertion rib portions 51 from the connecting surfaces 36E, 36F may be varied from each other. For example, the extending dimension of the insertion rib portions 51 from the connecting surface 36E may be about 3 mm, and the extending dimension of the insertion rib portions 51 from the connecting surface 36F may be about 6 mm. For example, one of the insertion grooves 59 may have a depth of about 3 mm, and the other have a depth of about 6 mm. By doing so, when disposing the cleaning cylinder 36 coaxially with and between the upstream cylinder 35 and the downstream cylinder 37, the cleaning cylinder 36 may be disposed in accordance with the flow direction of the exhaust gas of the DPF 26, while maintaining the orientation of the cleaning cylinder 36 in the axial direction.

The clamping members 67 will now be described with reference to FIGS. 2, 4, 5, and 8. As illustrated in FIGS. 2, 4, 5, and 8, each clamping member 67 includes two semicircular frame bodies 67A each having a substantially U- or V-shaped cross section (groove having a U- or V-shaped cross section and facing inward in the radial direction) (one frame body 67A having a substantially U-shaped cross section is exemplary illustrated in FIG. 8), a hinge portion 67B at which one ends of the frame bodies 67A are pivotably connected, and a bolt-and-nut type connecting portion 67C at which the other ends of the frame bodies 67A are connected.

By tightening bolts 67D of the connecting portions 67C, one of the clamping members 67 fastens the upstream flange portion 36B of the cleaning cylinder 36 and the flange portion 35C of the upstream cylinder 35 in the axial direction. Further, by tightening the bolts 67D of the connecting portions 67C, the other clamping member 67 fastens the downstream flange portion 36C of the cleaning cylinder 36 and the flange portion 37B of the downstream cylinder 37 in the axial direction.

Next, the removal steps of the cleaning cylinder 36 of the exhaust gas cleaning apparatus 21 configured as described earlier for cleaning the DPF 26 will now be described with reference to FIGS. 9 and 10. In the removal steps, the cleaning cylinder 36 between the upstream cylinder 35 and the downstream cylinder 37 is removed through the cutout port 18B of the opening 18A provided on top of the counterweight 12. First, a worker removes the lid member 32 (see FIG. 2) covering the opening 18A on top of the counterweight 12. Then, the worker removes the bolts 67D of the connecting portions 67C of the clamping members 67 (see FIGS. 3 and 4) from the nuts and removes the clamping members 67 through the cutout port 18B. Subsequently, the worker performs the following works through the cutout port 18B of the opening 18A.

As illustrated in FIGS. 9 and 10, the worker loosens the bolt 31 inserted in the long hole 47 formed on the upper end portion 27A of the mounting base 27 so that the downstream cylinder 37 becomes movable toward the downstream side (the left side of FIG. 9) integrally with the support member 45 and the mounting base 27 and so that the close contact between the connecting surface 35D and the connecting surface 36E and between the connecting surface 36F and the connecting surface 37D in the axial direction is relieved. Next, the worker holds the handle portion 362 of the handle 36D extending vertically upward from the outer peripheral surface of the cylinder portion 36A of the cleaning cylinder 36, and moves the downstream cylinder 37 in a direction away from the cleaning cylinder 36 (the direction indicated by the arrow 61 in FIG. 9), that is, to the downstream side in the axial direction.

Then, as illustrated in FIG. 10, the long hole 47 is formed in the upper end portion of the mounting base 27. The worker moves the mounting base 27 integrally with the downstream cylinder 37 and the support member 45 to the downstream side in the axial direction so that the end of the long hole 47 near the downstream cylinder 37 in the longitudinal direction thereof is brought into contact with contact with or brought close to the bolt 31. By doing so, the worker removes the insertion rib portion 51 of the downstream flange portion 36C of the cleaning cylinder 36 from the insertion groove 59 of the flange portion 37B of the downstream cylinder 37 and takes out the downstream cylinder 37 from the cleaning cylinder 36.

Then, the worker holding the handle portion 362 of the handle 36D moves the cleaning cylinder 36 substantially horizontally in a direction away from the upstream cylinder 35, that is, to the downstream side in the axial direction (the direction indicated by the arrow 62 in FIG. 9). By doing so, the worker can remove the insertion rib portion 51 of the upstream flange portion 36B of the cleaning cylinder 36 from the insertion groove 59 of the flange portion 35C of the upstream cylinder 35 and take out the cleaning cylinder 36 from the upstream cylinder 35.

Next, the worker holding the handle portion 362 of the handle 36D moves the cleaning cylinder 36 upward in the vertical direction (in the direction indicated by the arrow 63 in FIG. 9), that is, to the upper side of the vehicle, and takes out the cleaning cylinder 36 out of the vehicle through the cutout port 18B (see FIG. 3) of the opening 18A formed in the upper part of the counterweight 12. By doing so, the worker can fix the upstream cylinder 35 onto the mounting bracket 29 via the support member 41 and the bolt 42, and hold the handle portion 362 and take out only the cleaning cylinder 36 through the cutout port 18B (see FIG. 3) in the upward direction, with the downstream cylinder 37 axially movably mounted on the base 28 via the support member 45, the mounting base 27, and the bolt 31.

Subsequently, using an air gun etc., compressed air is blown onto the filter body 26A of the DPF 26 accommodated in the cleaning cylinder 36 (see FIG. 8) to remove ash of the particulate matter and unburnt residues accumulated in the small holes, so that the DPF 26 is cleaned and the capturing function of the DPF 26 is regenerated. Thus, after the cleaning of the DPF 26, the cleaning cylinder 36 accommodating the DPF 26 can be mounted again between the upstream cylinder 35 and the downstream cylinder 37 (see FIG. 11).

Subsequently, as the steps after the cleaning of the DPF 26, steps of mounting the cleaning cylinder 36 of the exhaust gas cleaning apparatus 21 having the above-described configuration between the upstream cylinder 35 and the downstream cylinder 37 will now be described with reference to FIGS. 4, 5, 8, 11, and 12. As illustrated in FIG. 11, first, the worker inserts ring-shaped gaskets 53 through the insertion rib portions 51 of the upstream flange portion 36B and the downstream flange portion 36C of the cleaning cylinder 36, and then further inserts the gaskets 53 into the gasket insertion grooves 52. Subsequently, the worker performs the following works through the cutout port 18B of the opening 18A (see FIG. 3) formed in the upper part of the counterweight 12.

First, the worker holds the handle portion 362 of the handle 36D extending vertically upward from the outer peripheral surface of the cylinder portion 36A of the cleaning cylinder 36, and lowers vertically (in the direction indicated by the arrow 71 in FIG. 11) the cleaning cylinder 36 through the cutout port 18B of the opening 18A to dispose the cleaning cylinder 36 between the upstream cylinder 35 and the downstream cylinder 37. Then, the worker holding the handle portion 362 of the handle 36D moves the cleaning cylinder 36 toward the upstream cylinder 35 (in the direction indicated by the arrow 72 in FIG. 11) to insert the insertion rib portion 51 of the upstream flange portion 36B of the cleaning cylinder 36 that has a ring shape in a front view into the insertion groove 59 of the flange portion 35C of the upstream cylinder 35 (see FIG. 8). It is noted the upstream cylinder 35 is fixed onto the mounting bracket 29 via the support member 41 with the bolt 42.

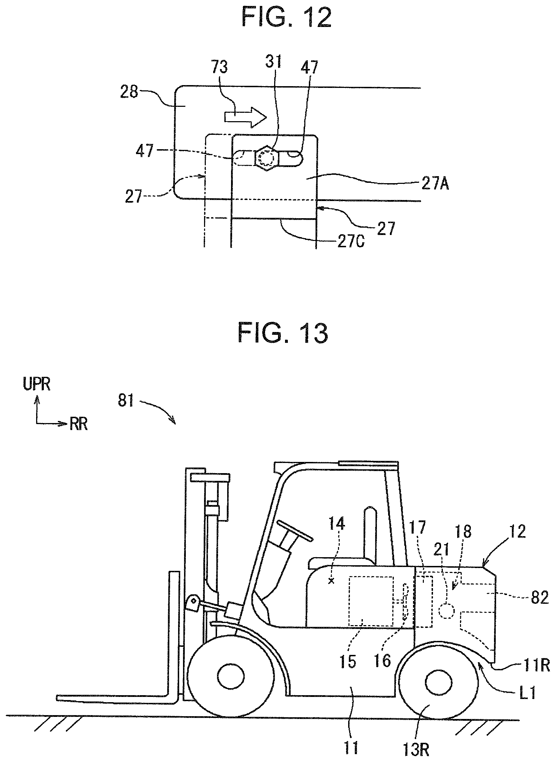

Next, as illustrated in FIGS. 11 and 12, after loosening the bolt 31 inserted in the long hole 47 formed on the upper end portion 27A of the mounting base 27, the worker holds the handle portion 362 of the handle 36D and moves the downstream cylinder 37 integrally with the mounting base 27 and the support member 45 toward the cleaning cylinder 36 (in the direction indicated by the arrow 73 in FIG. 11). Then, the worker holding the handle portion 362 of the handle 36D inserts the insertion rib portion 51 of the downstream flange portion 36C of the cleaning cylinder 36 that has a ring shape in a front view (see FIG. 9) into the insertion groove 59 of the flange portion 37B of the downstream cylinder 37, and tightens the bolt 31 temporarily.

Subsequently, as illustrated in FIGS. 4, 5, and 8, the worker first assembles annular clamping members 67 to the radially outer peripheral portion of the upstream flange portion 36B and the flange portion 35C of the upstream cylinder 35 of the cleaning cylinder 36. Then, the worker tightens the bolt 67D at the connecting portion 67C of the clamping member 67. By the tightening of the bolt 67D, the gasket 53 inserted in the gasket insertion groove 52 of the upstream flange portion 36B is crushed, so that the connecting surface 36E of the upstream flange portion 36B is contacted with and fixed to the connecting surface 35D of the flange portion 35C of the upstream cylinder 35 facing the connecting surface 36E.

Next, the worker assembles the annular clamping member 67 to the radially outer peripheral portion of the downstream flange portion 36C of the cleaning cylinder 36 and the flange portion 37B of the downstream cylinder 37. Then, the worker loosens the bolt 31 inserted in the long hole 47 formed in the upper end portion 27A of the mounting base 27, and tightens the bolt 67D at the connecting portion 67C of the clamping member 67. By the tightening of the bolt 67D, the gasket 53 inserted in the gasket insertion groove 52 of the downstream flange portion 36C is crushed, so that the connecting surface 36F of the downstream flange portion 36C is contacted with and fixed to the connecting surface 37D of the flange portion 37B of the downstream cylinder 37 facing the connecting surface 36F (see FIG. 9).

In this state, the worker tightens the bolt 31 inserted in the long hole 47 of the mounting base 27 and fixes the downstream cylinder 37 onto the base 28 via the support member 45 and the mounting base 27. In this case, as illustrated in FIG. 12, the bolt 31 is brought into contact with or brought close to the end of the long hole 47 opposite from the downstream cylinder 37 in the longitudinal direction of the long hole 47 and tightened.

Thus, as illustrated in FIGS. 4 and 5, in the exhaust gas cleaning apparatus 21, the cleaning cylinder 36 is disposed coaxially with and between the upstream cylinder 35 and the downstream cylinder 37. The upstream cylinder 35, the cleaning cylinder 36, and the downstream cylinder 37 that are aligned with each other in the axial direction are fixed in the ventilation chamber 18 of the vehicle body 11 (see FIG. 1). Then, the worker covers the opening 18A and the cutout port 18B with the lid member 32, and fixes the lid member 32 with bolts to end the cleaning of the DPF 26 (see FIG. 2).

As has been described in detail above, the forklift truck 10 according to the first embodiment includes the counterweight 12 mounted to the rear part of the vehicle body 11. The exhaust gas cleaning apparatus 21 is disposed along the vehicle width direction in the ventilation chamber 18 formed between the radiator 17 and the counterweight 12. The ventilation chamber 18 has in the top portion thereof the opening 18A which is opened upward and has a substantially rectangular shape that is longer in the vehicle width direction in a plan view. The vehicle body 11 has the cutout port 18B formed at the substantially intermediate position in the vehicle width direction and at the peripheral edge of the opening 18A at the rear side of the vehicle. The cutout port 18B is cut out in a U-shape in a plan view curved toward the rear side of the vehicle. The cutout port 18B is located immediately above the cleaning cylinder 36 and the pair of clamping members 67 disposed substantially at the intermediate position in the axial direction of the exhaust gas cleaning apparatus 21.

Further, the upstream cylinder 35 of the exhaust gas cleaning apparatus 21 is fixed to the mounting bracket 29 via the support member 41 with the bolt 42. Further, the downstream cylinder 37 of the exhaust gas cleaning apparatus 21 is fixed with the support member 45 and the mounting base 27 onto the base 28 with the bolt 31. The bolt 31 is inserted through the long hole 47 which is formed in the upper end portion 27A of the mounting base 27 and longer in the axial direction of the downstream cylinder 37, and then is tightened to the base 28.

Subsequently, the worker takes out the pair of clamping members 67 through the cutout port 18B of the opening 18A (see FIG. 3) formed in the upper part of the counterweight 12 so as to face the cleaning cylinder 36. Then, the worker can move the downstream cylinder 37, the support member 45, and the mounting base 27 along the long hole 47 integrally in the axial direction by loosening the bolt 31 fixing the mounting base 27 from the upper side of the vehicle. Thus, the worker holding the handle portion 362 of the handle 36D of the cleaning cylinder 36 can remove only the cleaning cylinder 36 by moving the downstream cylinder 37 quickly outward in the axial direction. The worker holding the handle 36D can take out only the cleaning cylinder 36 to the upper side of the vehicle through the cutout port 18B above the vehicle.

Then, after the cleaning of the DPF 26, the worker holding the handle 36D again lowers the cleaning cylinder 36 from the upper side of the vehicle to dispose the cleaning cylinder 36 between the upstream cylinder 35 and the downstream cylinder 37, and then slides the downstream cylinder 37 toward the cleaning cylinder 36 so that the cleaning cylinder 36 is connected serially and coaxially with and between the upstream cylinder 35 and the downstream cylinder 37. Subsequently, the worker connects the flange portions 35C and 36B, and the flange portions 36C and 37B, respectively using the clamping members 67. Specifically, the worker inserts the clamping members 67 from the upper side of the vehicle into the opening 18A and the cutout port 18B, holds the pair of the flange portions 35C and 36B that are facing each other, and the pair of the flange portions 36C and 37B that are facing each other, with the clamping members 67 (each pair of the flange portions is held in the groove of the corresponding clamping member 67) to thereby connect the respective pairs of the flange portions 35C, 36B and 36C, 37B. Then, the worker fastens the mounting base 27 to the base 28 with the bolt 31 to thereby complete the cleaning of the DPF 26.

As described earlier, the worker can clean the exhaust gas cleaning apparatus 21 at a customer's site without using a crane or the like. As a result, the time required for cleaning the exhaust gas cleaning apparatus 21 may be reduced, and operation efficiency of the forklift truck 10 may be improved. In addition, with a simple configuration, the worker can install and remove the cleaning cylinder 36 from the upper side of the vehicle through the cutout port 18B of the opening 18A without using crane or the like.

Further, when the connecting surfaces 36E, 36F of the upstream and downstream flange portions 36B, 36C of the cleaning cylinder 36 are contacted with the connecting surfaces 35D, 37D of the flange portions 35C, 37B of the upstream and downstream cylinders 35, 37, the ring-shaped insertion rib portions 51 extending toward the outer side in the axial direction beyond the connecting surfaces 36E, 36F in the axial direction for a predetermined length throughout the circumference thereof, are inserted into the insertion grooves 59 that are annular in a front view and formed through the whole circumferences of the connecting surfaces 35D, 37D corresponding to the insertion rib portions 51. With this configuration, the cleaning cylinder 36 is coaxially supported by the upstream cylinder 35 and the downstream cylinder 37 via the insertion rib portions 51, so that the workability in connecting the cleaning cylinder 36 between the upstream cylinder 35 and the downstream cylinder 37 may further be improved.

### Second Embodiment

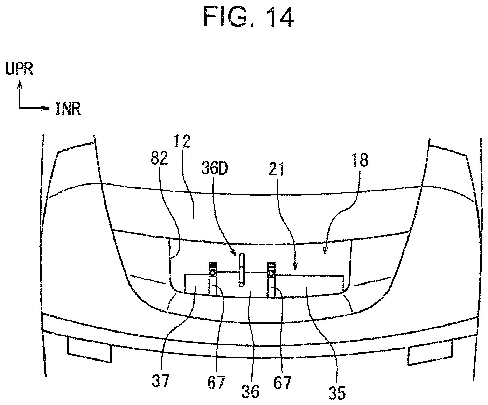

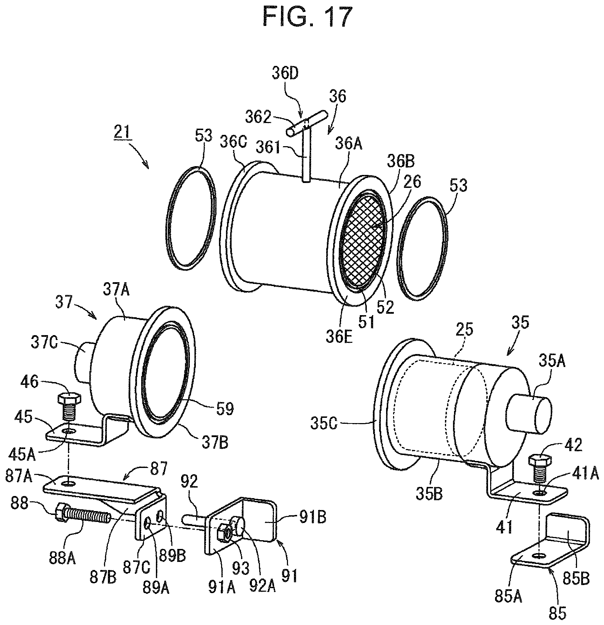

Next, schematic configuration of a forklift truck 81 according to a second embodiment of the present disclosure will now be described with reference to FIGS. 13 to 15. Arrows RR and UPR indicated in FIGS. 13 to 15 show the rear side and the upper side of the vehicle, respectively. Arrow INR indicated in FIG. 14 shows the inner side of the vehicle in the vehicle width direction. In the following description and FIGS. 13 to 21, reference numerals used to designate parts and configurations of the forklift truck 10 and the exhaust gas cleaning apparatus 21 according to the second embodiment designate the same or counterpart parts and configurations of the forklift truck 10 and the exhaust gas cleaning apparatus 21 according to the first embodiment illustrated in FIGS. 1 to 12.

The overall configuration of the forklift truck 81 according to the second embodiment is substantially the same as the forklift truck 10 of the first embodiment. However, as illustrated in FIGS. 13 to 15, top of the ventilation chamber 18 provided at the rear side of the radiator 17 of the forklift truck 81 is closed, so that the forklift truck 81 does not have an opening 18A and a cutout port 18B. Meanwhile, the counterweight 12 has in the rear part thereof a rear opening (the opening of the present disclosure) 82 extending through the rear wall portion of the counterweight 12 in the vehicle longitudinal direction, instead of the upper and lower rear air outlet ports 19. The rear opening 82 is located so as to face the exhaust gas cleaning apparatus 21 disposed along the vehicle width direction.

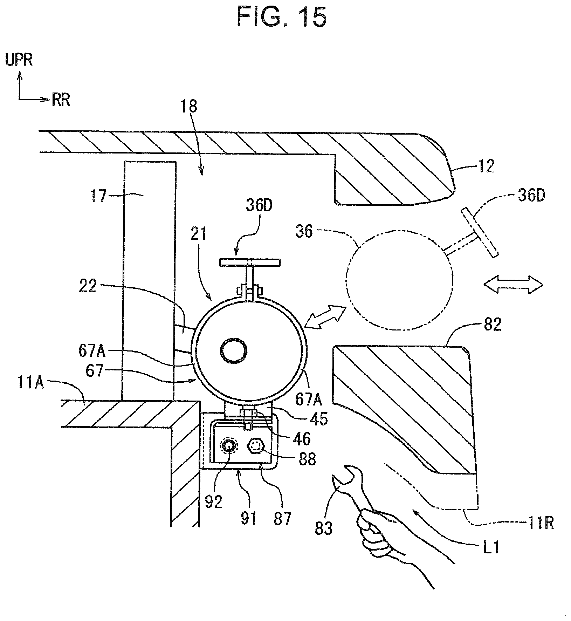

The rear opening 82 has a substantially rectangular cross section which is longer in the vehicle width direction and has a width in the vehicle vertical direction. The dimension of the rear opening 82 in the vehicle width direction is substantially equal to the axial dimension of the exhaust gas cleaning apparatus 21, as illustrated in FIG. 14, and the dimension of the rear opening 82 in the vehicle vertical direction is determined so as to permit the cleaning cylinder 36 having the handle 36D to pass therethrough, as illustrated in FIG. 15. As illustrated in FIG. 14, the rear opening 82 is positioned so that the upper half of the exhaust gas cleaning apparatus 21 disposed along the vehicle width direction is seen from the rear side of the vehicle through the rear opening 82. Thus, the air that has passed through the radiator 17 flows through a ventilation chamber 18 and then is blown toward the rear side of the vehicle through the rear opening 82 formed through the rear wall portion of the counterweight 12 in the longitudinal direction of the vehicle body 11.

Further, as illustrated in FIGS. 13 and 15, a clearance L1 is provided between the lower end 11R of the rear end portion of the vehicle body 11 and the rear wheels 13R. For example, the clearance L1 is designed such that, when the vehicle body 11 is at a stop and only the rear wheels 13R are turned at their maximum turning angle of turning the vehicle body 11 to the left and backward without driving the vehicle, a worker can insert a hand holding a tool such as a spanner 83 through the clearance L1 to the mounting positions of the support member 45 supporting the downstream cylinder 37 of the exhaust gas cleaning apparatus 21 and the second mounting base 87 and then tighten or loosen the bolt 88.

Further, as illustrated in FIGS. 15 to 17, the lower end side of the support member 41 which is bent in a crank shape in a side view and supports the upstream cylinder 35 of the exhaust gas cleaning apparatus 21 is disposed on an upper surface 85A of the upstream mounting bracket 85 extending substantially horizontally from the wall surface portion of the vehicle body frame 11A at the rear side of the vehicle body frame 11A, instead of the mounting bracket 29 (see FIG. 5), and then fixed to the upper surface 85A with the bolt 42 inserted through the through hole 41A of the support member 41. The upstream mounting bracket 85 is bent in an L-shape in a side view as viewed in the vehicle width direction, and includes the upper surface 85A having a substantially rectangular plate shape and a wall portion 85B which has a substantially rectangular shape and extends vertically upward from the end of the upper surface 85A near the front part of the vehicle. The upstream mounting bracket 85 is fixed to the wall surface portion of the vehicle body frame 11Aon the rear side of the vehicle by welding or the like.

Further, as illustrated in FIGS. 15 to 17, the lower end side of the support member 45 which is bent in a crank shape in a side view and supports the downstream cylinder 37 of the exhaust gas cleaning apparatus 21 is disposed on an upper surface 87A of the second mounting base 87 (the mounting base member) disposed substantially horizontally along the axial direction of the downstream cylinder 37, instead of the mounting base 27 (see FIG. 5), and then fixed to the upper surface 87A with the bolt 46 inserted through the through hole 45A of the support member 45.

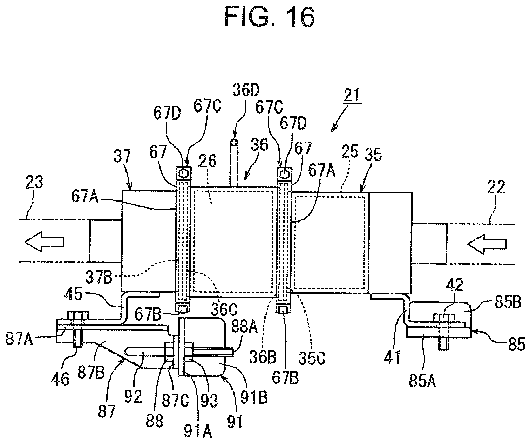

The second mounting base 87 is bent in a reversed L-shape in a side view as viewed from the outside in the vehicle width direction (from the left side of FIG. 16), and includes the upper surface 87A, a reinforcing wall portion 87B, and a guide portion 87C. The upper surface 87A has a rectangular plate shape which is longer in the vehicle width direction. The reinforcing wall portion 87B extends vertically from the end of the upper surface 87A near the front part of the vehicle. The guide portion 87C has a rectangular shape and extends substantially at a right angle toward the rear side of the vehicle from the end of the reinforcing wall portion 87B located inside in the vehicle width direction (on the right side in FIG. 16). The guide portion 87C of the second mounting base 87 has a first through hole 89A and a second through hole 89B disposed next to the first through hole 89A. The bolt 88 is inserted through the first through hole 89A from the outside in the vehicle width direction (from the left side in FIG. 16). A substantially long columnar guide shaft 92, which will be described in detail later, is inserted through the second through hole 89B from the inside in the vehicle width direction (from the right side in FIG. 16).

The bolt 88 includes a shaft portion 88A which is longer than a sum of the extending dimensions of the insertion rib portions 51 of the cleaning cylinder 36 from the flange portions 36B, 36C (for example, about from 40 to 60 mm) and threaded throughout the length of the shaft portion 88A. When the aforementioned guide shaft 92 having a substantially long columnar shape is inserted through the second through hole 89B, the guide portion 87C of the second mounting base 87 is brought into contact with or brought close to the surface of a mounting portion 91A of a downstream mounting bracket 91 on the outer side surface in the vehicle width direction (the left surface in FIG. 16), and then is fixed with the bolt 88 inserted through the first through hole 89A.

The mounting portion 91A of the downstream mounting bracket 91 has a substantially rectangular plate shape that extends orthogonally to the axial direction of the downstream cylinder 37 from the wall surface portion of the vehicle body frame 11A at the rear side of the vehicle body frame 11A. The downstream mounting bracket 91 is bent in an L-shape in a side view as viewed from above the vehicle, and includes the mounting portion 91A having a substantially rectangular plate shape and a wall portion 91B which has a substantially rectangular shape and extends substantially at a right angle toward the inside in the vehicle width direction from the end of the mounting portion 91A located near the front part of the vehicle. The wall portion 91 B is fixed to the wall surface portion of the vehicle body frame 11A on the rear side of the vehicle by welding or the like.

The mounting portion 91A of the downstream mounting bracket 91 has a through hole (not shown) at a position corresponding to the first through hole 89A of the guide portion 87C of the second mounting base 87. A nut 93 is fixed to the inner edge of the through hole in the vehicle width direction by welding or the like. The mounting portion 91A of the downstream mounting bracket 91 has another through hole (not shown) at a position next to the nut 93 and corresponding to the second through hole 89B of the guide portion 87C of the second mounting base 87. The guide shaft 92 having a substantially long columnar shape is inserted through the through hole from the inner side in the vehicle width direction (the right side in FIG. 16), and a head 92A of the guide shaft 92 is fixed to the mounting portion 91A by welding or the like.

The guide shaft 92 is formed in a substantially long columnar shape and has a length that is longer than the sum of the extending dimensions of the insertion rib portions 51 of the cleaning cylinder 36 from the flange portions 36B, 36C (for example, about from 40 to 60 mm) and threaded throughout the length thereof. It is preferable that the length of the guide shaft 92 be substantially the same as or longer than the length of the bolt 88. The leading end of the guide shaft 92 is formed in a semispherical shape or tapered.

As illustrated in FIGS. 15 and 16, when the cleaning cylinder 36 is mounted between and coaxially with the upstream cylinder 35 and the downstream cylinder 37, the downstream cylinder 37 is fixed to the downstream mounting bracket 91 with the bolt 88 via the support member 45 and the second mounting base 87. The guide shaft 92 is inserted through the second through hole 89B of the guide portion 87C of the second mounting base 87.

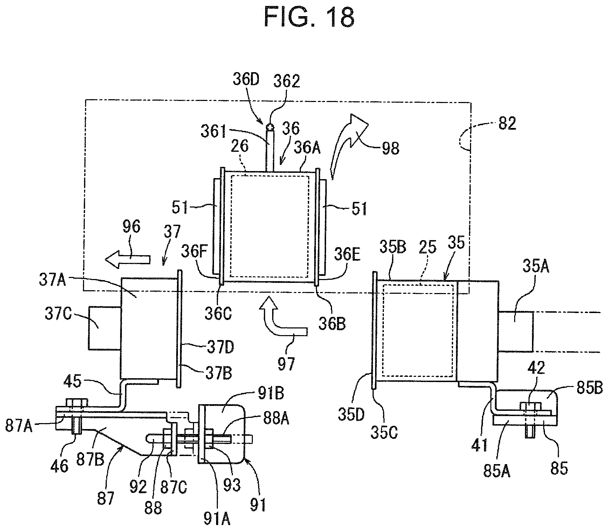

As illustrated in FIG. 18, when the clamping members 67 are removed and the cleaning cylinder 36 is removed from between the upstream cylinder 35 and the downstream cylinder 37, the bolt 88 is loosened for a predetermined length (for example, about 30 mm), and the second mounting base 87 is guided by the guide shaft 92 and the shaft portion 88A of the bolt 88 to slide to the outer side in the vehicle width direction (to the left side in FIG. 18). Thus, by loosening the bolt 88 for a predetermined length (for example, about 30 mm) and sliding the second mounting base 87 along the guide shaft 92 and the shaft portion 88A of the bolt 88, the downstream cylinder 37, the support member 45, and the second mounting base 87 may be moved easily and integrally back and forth along the axial direction.

Next, the removal steps of the cleaning cylinder 36 of the exhaust gas cleaning apparatus 21 configured as described earlier for cleaning the DPF 26 will now be described with reference to FIGS. 15, 18 and 19. In the removal steps, the cleaning cylinder 36 between the upstream cylinder 35 and the downstream cylinder 37 is removed through the rear opening 82 formed in the rear wall portion of the counterweight 12.

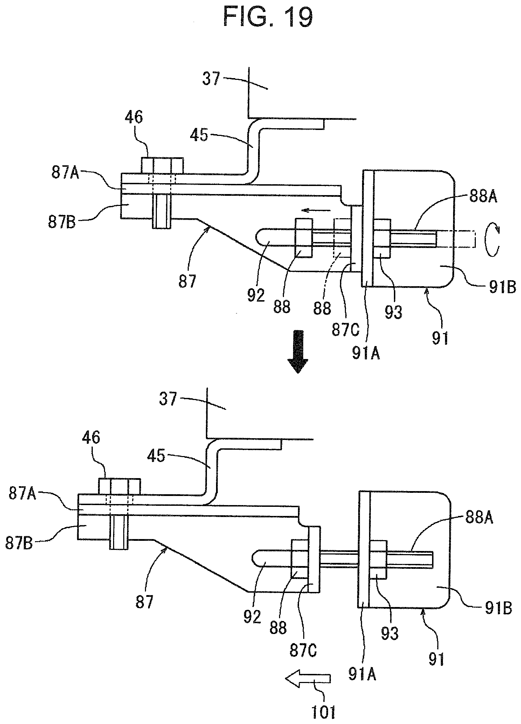

First, the worker steers only the rear wheels 13R of the stopped vehicle body 11. At this time, the rear wheels 13R are turned to the left and backward to their maximum steering angle, without driving the vehicle. Then, as illustrated in FIG. 15, the worker inserts a hand holding a tool such as the spanner 83 through the clearance L1 formed between the lower end 11R of the rear end portion of the vehicle body 11 and the rear wheels 13R (see FIG. 13), and loosens the bolt 88 for a predetermined length (for example, about 30 mm), as in the upper illustration of FIG. 19.

Then, the worker removes the bolts 67D of the connecting portions 67C of the clamping members 67 (see FIGS. 14 and 16) from the nuts and removes the clamping members 67 through the rear opening 82. By doing so, the downstream cylinder 37 becomes movable to the downstream side in the axial direction (to the left side in FIG. 18) integrally with the support member 45 and the second mounting base 87, and the close contact between the connecting surface 35D and the connecting surface 36E and between the connecting surface 36F and the connecting surface 37D in the axial direction is relieved. Next, the worker performs the following work through the rear opening 82.

As illustrated in FIGS. 18 and 19, the worker holds the handle portion 362 of the handle 36D extending vertically upward from the outer peripheral surface of the cylinder portion 36A of the cleaning cylinder 36, and pushes the downstream cylinder 37 in a direction away from the cleaning cylinder 36 (the direction indicated by the arrow 96 in FIG. 18), that is, to the downstream side in the axial direction, to thereby slide the second mounting base 87 integrally with the downstream cylinder 37 and the support member 45 to the downstream side in the axial direction (in the direction indicated by the arrow 101 in FIG. 19) along the guide shaft 92 and the shaft portion 88A of the bolt 88.

Then, the worker brings the guide portion 87C of the second mounting base 87 into contact with or brought close to the head of the bolt 88. By doing so, the worker holding the handle portion 362 of the handle 36D of the cleaning cylinder 36 can pull out the insertion rib portion 51 of the downstream flange portion 36C of the cleaning cylinder 36 from the insertion groove 59 of the flange portion 37B of the downstream cylinder 37 and then remove the downstream cylinder 37 from the cleaning cylinder 36.

Subsequently, the worker holding the handle portion 362 of the handle 36D moves the cleaning cylinder 36 substantially horizontally in a direction away from the upstream cylinder 35, that is, to the downstream side in the axial direction (the direction indicated by the arrow 97 in FIG. 18). By doing so, the worker removes the insertion rib portion 51 of the upstream flange portion 36B of the cleaning cylinder 36 from the insertion groove 59 of the flange portion 35C of the upstream cylinder 35 and takes out the cleaning cylinder 36 from the upstream cylinder 35.

Subsequently, as illustrated in FIGS. 15 and 18, the worker holding the handle portion 362 of the handle 36D inclines the handle 36D toward the worker and moves the cleaning cylinder 36 to the rear side of the vehicle (in the direction indicated by the arrow 98 in FIG. 18) and takes out the cleaning cylinder 36 out of the vehicle through the rear opening 82 formed in the rear wall portion of the counterweight 12. By doing so, the worker can fix the upstream cylinder 35 onto the upper surface 85A of the upstream mounting bracket 85 via the support member 41 and the bolt 42, and hold the handle portion 362 and take out only the cleaning cylinder 36 through the rear opening 82 toward the rear side of the vehicle, with the downstream cylinder 37 axially movably mounted on the mounting portion 91A of the downstream mounting bracket 91 via the support member 45 and the second mounting base 87.

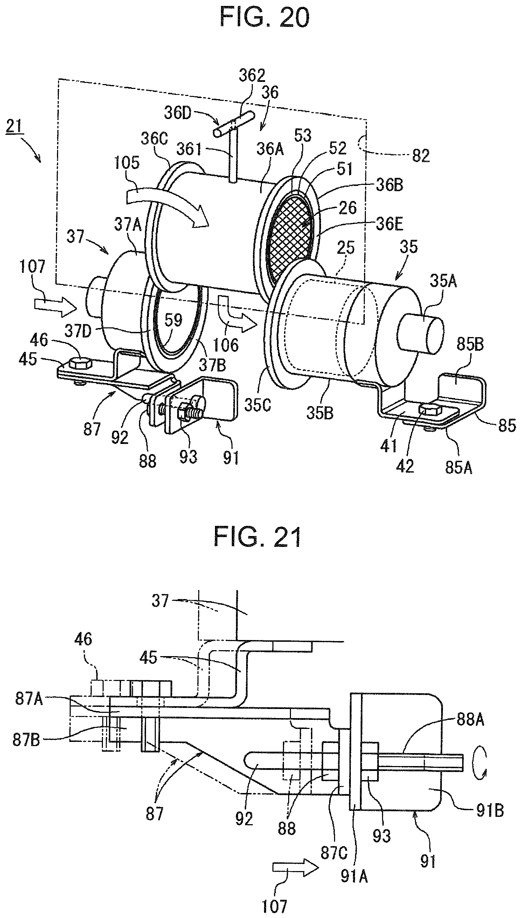

Subsequently, using an air gun etc., compressed air is blown onto the filter body 26A of the DPF 26 accommodated in the cleaning cylinder 36 (see FIG. 8) to remove ash of the particulate matter and unburnt residues accumulated in the small holes, so that the DPF 26 is cleaned and the capturing function of the DPF 26 is regenerated. Thus, after the cleaning of the DPF 26, the cleaning cylinder 36 accommodating the DPF 26 can be mounted again between the upstream cylinder 35 and the downstream cylinder 37 (see FIG. 20).

Subsequently, as the steps after the cleaning of the DPF 26, steps of mounting the cleaning cylinder 36 of the exhaust gas cleaning apparatus 21 having the above-described configuration between the upstream cylinder 35 and the downstream cylinder 37 will now be described with reference to FIGS. 15, 16, 20, and 21. As illustrated in FIG. 20, first, the worker inserts the ring-shaped gaskets 53 through the insertion rib portions 51 of the upstream flange portion 36B and the downstream flange portion 36C of the cleaning cylinder 36, and then further inserts the gaskets 53 into the gasket insertion grooves 52. Subsequently, the worker performs the following works through the rear opening 82 (see FIG. 14) formed in the rear wall portion of the counterweight 12.

First, as illustrated in FIGS. 15 and 20, the worker holds the handle portion 362 of the handle 36D extending vertically upward from the outer peripheral surface of the cylinder portion 36A of the cleaning cylinder 36, and inclines the handle 36D toward the worker and inserts the cleaning cylinder 36 toward the front side of the vehicle (in the direction indicated by the arrow 105 in FIG. 20) through the rear opening 82 to dispose the cleaning cylinder 36 between the upstream cylinder 35 and the downstream cylinder 37. Then, the worker holding the handle portion 362 of the handle 36D moves the cleaning cylinder 36 toward the upstream cylinder 35 (in the direction indicated by the arrow 106 in FIG. 20) to insert the insertion rib portion 51 of the upstream flange portion 36B of the cleaning cylinder 36 that has a ring shape in a front view into the insertion groove 59 of the flange portion 35C of the upstream cylinder 35 (see FIG. 8). Further, the upstream cylinder 35 is fixed onto the upstream mounting bracket 85 via the support member 41 with the bolt 42.

Subsequently, as illustrated in FIGS. 20 and 21, the worker holds the handle portion 362 of the handle 36D extending vertically upward from the outer peripheral surface of the cylinder portion 36A of the cleaning cylinder 36, and pushes the downstream cylinder 37 toward the cleaning cylinder 36, that is, to the upstream side in the axial direction (the direction indicated by the arrow 107 in FIG. 20), to thereby slide the second mounting base 87 integrally with the downstream cylinder 37 and the support member 45 to the upstream side in the axial direction (in the direction indicated by the arrow 107 in FIG. 21) along the guide shaft 92 and the shaft portion 88A of the bolt 88. Then, the worker holding the handle portion 362 of the handle 36D inserts the insertion rib portion 51 of the downstream flange portion 36C of the cleaning cylinder 36 that has a ring shape in a front view (see FIG. 18) into the insertion groove 59 of the flange portion 37B of the downstream cylinder 37.

Subsequently, as illustrated in FIG. 16, the worker first assembles the annular clamping members 67 to the radially outer peripheral portions of the upstream flange portion 36B and the flange portion 35C of the upstream cylinder 35 of the cleaning cylinder 36. Then, the worker tightens the bolt 67D at the connecting portion 67C of the clamping member 67. By the tightening of the bolt 67D, the gasket 53 inserted in the gasket insertion groove 52 of the upstream flange portion 36B is crushed, so that the connecting surface 36E of the upstream flange portion 36B is contacted with and fixed to the connecting surface 35D of the flange portion 35C of the upstream cylinder 35 facing the connecting surface 36E.

Next, the worker assembles the annular clamping member 67 to the radially outer peripheral portion of the downstream flange portion 36C of the cleaning cylinder 36 and the flange portion 37B of the downstream cylinder 37. Then, the worker tightens the bolt 67D at the connecting portion 67C of the clamping member 67. By the tightening of the bolt 67D, the gasket 53 inserted in the gasket insertion groove 52 of the downstream flange portion 36C is crushed, so that the connecting surface 36F (see FIG. 9) of the downstream flange portion 36C is contacted with and fixed to the connecting surface 37D of the flange portion 37B of the downstream cylinder 37 facing the connecting surface 36F.

In this state, as illustrated in FIG. 15, the worker inserts a hand holding a tool such as a spanner through the clearance L1 formed between the lower end 11R of the rear end portion of the vehicle body 11 and the rear wheels 13R (see FIG. 13), and tightens the bolt 88, as illustrated in FIG. 21, so that the downstream cylinder 37 is fixed to the mounting portion 91A of the downstream mounting bracket 91 via the support member 45 and the second mounting base 87. In this case, the guide portion 87C of the second mounting base 87 is brought into contact with or brought close to the mounting portion 91A of the downstream mounting bracket 91 and fixed.

Accordingly, the cleaning of the DPF 26 is finished, and as illustrated in FIG. 16, in the exhaust gas cleaning apparatus 21, the cleaning cylinder 36 is disposed coaxially with and between the upstream cylinder 35 and the downstream cylinder 37. The upstream cylinder 35, the cleaning cylinder 36, and the downstream cylinder 37 that are aligned with each other in the axial direction are fixed in the ventilation chamber 18 of the vehicle body 11 (see FIG. 13).

As has been described in detail above, the forklift truck 81 according to the second embodiment includes the counterweight 12 mounted to the rear part of the vehicle body 11. The exhaust gas cleaning apparatus 21 is disposed along the vehicle width direction in the ventilation chamber 18 formed between the radiator 17 and the counterweight 12. The top of the ventilation chamber 18 is closed. Meanwhile, the counterweight 12 has the rear opening 82 extending through the rear wall portion of the counterweight 12 in the vehicle longitudinal direction. The rear opening 82 is located so as to face the exhaust gas cleaning apparatus 21 (or the cleaning cylinder 36) disposed along the vehicle width direction.

The rear opening 82 has a substantially rectangular cross section which is longer in the vehicle width direction and has a width in the vehicle vertical direction. The dimension of the rear opening 82 in the vehicle width direction is substantially equal to the axial dimension of the exhaust gas cleaning apparatus 21, and the dimension of the rear opening 82 in the vehicle vertical direction is determined so as to permit the cleaning cylinder 36 having the handle 36D to pass therethrough. The rear opening 82 is positioned so that the upper half of the exhaust gas cleaning apparatus 21 disposed along the vehicle width direction is seen from the rear side of the vehicle through the rear opening 82.

Further, the upstream cylinder 35 of the exhaust gas cleaning apparatus 21 is fixed to the upstream mounting bracket 85 via the support member 41 with the bolt 42. Further, the downstream cylinder 37 of the exhaust gas cleaning apparatus 21 is fixed onto the mounting portion 91A of the downstream mounting bracket 91 via the support member 45 and the second mounting base 87 with bolt 88. The bolt 88 is inserted into the first through hole 89A of the guide portion 87C of the second mounting base 87 from the outer side in the vehicle width direction, and the substantially long columnar guide shaft 92 extending to the outer side in the vehicle width direction from the mounting portion 91A of the downstream mounting bracket 91 is inserted into the second through hole 89B of the guide portion 87C. The bolt 88 includes the shaft portion 88A which is of a length substantially equal to the length of the guide shaft 92 and is threaded throughout the length thereof.

Further, the clearance L1 is provided between the lower end 11R of the rear end portion of the vehicle body 11 and the rear wheels 13R. The clearance L1 is designed such that, by turning only the rear wheels 13R of the vehicle body 11 at a stop without driving the vehicle, the worker can insert the spanner 83 or the like through the clearance L1 to the mounting positions of the second mounting base 87 supporting the downstream cylinder 37 of the exhaust gas cleaning apparatus 21 and then tighten or loosen the bolt 88.

Thus, the worker turns the rear wheels 13R without driving the vehicle, inserts a hand holding the spanner 83 or the like through the clearance L1 formed between the lower end 11R of the rear end portion of the vehicle body 11 and the rear wheels 13R, and loosens the bolt 88 for a predetermined length (for example, about 30 mm). Then, the worker removes the pair of clamping members 67 through the rear opening 82. Then, the worker holding the handle portion 362 of the handle 36D can slide the downstream cylinder 37, the support member 45, and the second mounting base 87 integrally along the guide shaft 92 and the shaft portion 88A of the bolt 88 to the downstream side in the axial direction.

Thus, the worker holding the handle portion 362 of the handle 36D of the cleaning cylinder 36 can remove only the cleaning cylinder 36 by moving the downstream cylinder 37 quickly outward in the axial direction. The worker holding the handle 36D can take out only the cleaning cylinder 36 through the rear opening 82 to the rear side of the vehicle.

Then, after the cleaning of the DPF 26, the worker mounts the gaskets 53 again to the upstream flange portion 36B and the downstream flange portion 36C of the cleaning cylinder 36. Then, the worker holds the handle portion 362 of the handle 36D, inserts the cleaning cylinder 36 toward the front side of the vehicle through the rear opening 82 to dispose the cleaning cylinder 36 between the upstream cylinder 35 and the downstream cylinder 37. Then, the worker slides the downstream cylinder 37 toward the cleaning cylinder 36 so that the cleaning cylinder 36 is connected serially and coaxially with and between the upstream cylinder 35 and the downstream cylinder 37.

Subsequently, the worker inserts the clamping members 67 from the rear side of the vehicle into the rear opening 82, and holds the pair of the flange portions 35C and 36B, and the pair of the flange portions 36C and 37B with the clamping members 67 to thereby connect the respective pairs of the flange portions 35C, 36B and 36C, 37B. Subsequently, the worker inserts a hand holding the spanner 83 or the like through the clearance L1 formed between the lower end 11R of the rear end portion of the vehicle body 11 and the rear wheels 13R, and fastens the second mounting base 87 to the downstream mounting bracket 91 with the bolt 88, to thereby finish the cleaning of the DPF 26.

Thus, the worker can clean the exhaust gas cleaning apparatus 21 at a customer's site without using a crane or the like. As a result, the time required for cleaning the exhaust gas cleaning apparatus 21 may be reduced, and operation efficiency of the forklift truck 81 may be improved. In addition, with a simple configuration, the worker can install and remove the cleaning cylinder 36 from the rear side of the vehicle easily through the rear opening 82 without using crane or the like.

It is to be noted that, reference numerals used to designate the parts and configurations of the forklift trucks 10, 81 and the exhaust gas cleaning apparatus 21 according to the following descriptions (A) and (B) designate the same or counterpart parts or configurations of the forklift trucks 10, 81 and the exhaust gas cleaning apparatus 21 according to the first and second embodiments illustrated in FIGS. 1 to 21.
(A) For example, in the forklift truck 81 according to the second embodiment, a mesh cover having a substantially rectangular shape which is longer in the vehicle width direction may be detachably mounted to the end of the rear opening 82 which is formed in the rear wall portion of the counterweight 12 and is near the rear end of the vehicle so that the rear opening 82 is closable by the cover. With this cover, entry of foreign matters into the ventilation chamber 18 is prevented.
(B) In the above description, the mounting structure of the exhaust gas cleaning apparatus according to the present disclosure is applied to the forklift trucks 10 and 81. However, the present disclosure may be applicable to other industrial vehicles, such as shovel loaders.

## Claims

1. An exhaust gas cleaning apparatus (21) comprising:
- an upstream cylinder (35) provided in an exhaust gas passage (21, 22) of an engine (15) mounted on a vehicle body (11);
- a downstream cylinder (37) disposed on a downstream side of the upstream cylinder (35);
- a cleaning cylinder (36) that is removably serially connected between and coaxially with the upstream cylinder (35) and the downstream cylinder (37), the cleaning cylinder (36) accommodating a cleaning processing member (26) that is configured to pass exhaust gas therethrough to clean the exhaust gas, and
- a mounting structure disposed within a counterweight (12) installed in a rear portion of the vehicle body (11), wherein
the upstream cylinder (35), the cleaning cylinder (36), and the downstream cylinder (37) each have at an end thereof a flange portion (35C, 36B, 36C, 37B) having a flat connecting surface (35D, 36E, 36F, 37D), and the upstream cylinder (35), the cleaning cylinder (36), and the downstream cylinder (37) are contacted with and connected to each other at the connecting surfaces (35D, 36E, 36F, 37D), and
the mounting structure of the exhaust gas cleaning apparatus (21) comprises:
a pair of clamping members (67) each having a groove of a U-shaped or V-shaped cross section and formed in an annular shape so that the groove faces inward, the clamping members (67) being configured to hold in the grooves thereof and disconnectably connect the upstream flange portion (36B) of the cleaning cylinder (36) and the flange portion (35C) of the upstream cylinder (35) that are facing each other, and the downstream flange portion (36C) of the cleaning cylinder (36) and the flange portion (37B) of the downstream cylinder (37) that are facing each other;
an opening (18A, 82) provided at a specified position in the counterweight (12) to extend therethrough;
a first support member (41) that is fixed to the vehicle body (11) and configured to support the upstream cylinder (35);
a mounting base member (27, 87) which is attached to the vehicle body (11) with a bolt (31, 88); and
a second support member (45), one end of which is fixed to the mounting base member (27, 87) and the other end of which is fixed to the downstream cylinder (37) in such a way that said one end is located on the downstream side of a cylinder portion (37A) of the downstream cylinder (37) in an axial direction of the exhaust gas cleaning apparatus (21), to thereby support the downstream cylinder (37),
wherein the opening (18A, 82) is of a size that permits mounting and dismounting of the pair of the clamping members (67) through the opening (18A, 82), and permits the cleaning cylinder (36) to pass therethrough, and after the bolt (31, 88) is loosened, the mounting base member (27, 87), the second support member (45), and the downstream cylinder (37) are integrally slidable along an axial direction of the cleaning cylinder (36).

2. The exhaust gas cleaning apparatus (21) according to claim 1, wherein
the opening (18A) is formed in an upper part of the counterweight (12) so as to face the cleaning cylinder (36), and
the mounting base member (27, 87) is detachably attached from the upper side of the vehicle body (11) to a base (28) disposed within the counterweight (12) with the bolt (31, 88) through the opening (18A), and has a long hole (47) which is longer in the axial direction and through which the bolt (31, 88) is inserted.

3. The exhaust gas cleaning apparatus (21) according to claim 1, wherein
the opening (82) is formed in a rear part of the counterweight (12) so as to face the cleaning cylinder (36),
the mounting structure of the exhaust gas cleaning apparatus (21) includes a mounting bracket (91) that is disposed below the second support member (45) and extends toward the rear side from the vehicle body (11), and
the mounting base member (87) is detachably attached to the mounting bracket (91) with the bolt (31, 88), and has a through hole (89A) through which a guide shaft (92) that extends from the mounting bracket (91) toward an outer side in the axial direction for a predetermined length is inserted.

4. The exhaust gas cleaning apparatus (21) according to any one of claims 1 to 3, wherein
the cleaning cylinder (36) includes a handle (36D) that is provided on an outer peripheral surface of the cleaning cylinder (36) at a substantially intermediate position thereof in the axial direction so as to extend toward the upper side of the vehicle body (11).

5. The exhaust gas cleaning apparatus (21) according to any one of claims 1 to 4, wherein
each of the upstream flange portion (36B) and the downstream flange portion (36C) of the cleaning cylinder (36), or, each of the flange portion (35C) of the upstream cylinder (35) and the flange portion (37B) of the downstream cylinder (37), has a ring-shaped insertion rib portion (51) that extends toward an outer side in the axial direction beyond the corresponding connecting surface (35D, 36E, 36F, 37D) for a predetermined length throughout the whole circumference of the insertion rib portion (51) from the connecting surface (35D, 36E, 36F, 37D), and
each of the upstream flange portion (36B) and the downstream flange portion (36C) of the cleaning cylinder (36), or, each of the flange portion (35C) of the upstream cylinder (35) and the flange portion (37B) of the downstream cylinder (37), whichever does not have the insertion rib portion (51) has an insertion groove (59) that has an annular shape in a front view and is formed at a position corresponding to the insertion rib portion (51) and conforming to the whole circumference of the insertion rib portion (51), and the insertion rib portion (51) is inserted into the insertion groove (59).

## Patentansprüche

1. Abgasreinigungseinrichtung (21), umfassend:
- einen vorgelagerten Zylinder (35), der in einem Abgasdurchgang (21, 22) eines an einem Fahrzeugkörper (11) montierten Motors (15) bereitgestellt ist;
- einen nachgelagerten Zylinder (37), der auf einer nachgelagerten Seite des vorgelagerten Zylinders (35) angeordnet ist;
- einen Reinigungszylinder (36), der abnehmbar zwischen und koaxial zu dem vorgelagerten Zylinder (35) und dem nachgelagerten Zylinder (37) in Reihe verbunden ist, wobei der Reinigungszylinder (36) ein Reinigungsverarbeitungselement (26) aufnimmt, das konfiguriert ist, um Abgas hindurchzuleiten, um das Abgas zu reinigen, und
- eine Montagestruktur, die innerhalb eines in einem hinteren Abschnitt des Fahrzeugkörpers (11) installierten Gegengewichts (12) angeordnet ist, wobei
der vorgelagerte Zylinder (35), der Reinigungszylinder (36) und der nachgelagerte Zylinder (37) jeweils an einem Ende davon einen Flanschabschnitt (35C, 36B, 36C, 37B) mit einer flachen Verbindungsoberfläche (35D, 36E, 36F, 37D) aufweisen und der vorgelagerte Zylinder (35), der Reinigungszylinder (36) und der nachgelagerte Zylinder (37) an den Verbindungsoberflächen (35D, 36E, 36F, 37D) miteinander in Kontakt gebracht und verbunden sind, und
die Montagestruktur der Abgasreinigungseinrichtung (21) umfasst:
ein Paar von Klemmelementen (67), die jeweils eine Nut eines U-förmigen oder V-förmigen Querschnitts aufweisen und derart in einer kreisförmigen Form gebildet sind, dass die Nut nach innen weist, wobei die Klemmelemente (67) konfiguriert sind, um in den Nuten davon zu halten und den vorgelagerten Flanschabschnitt (36B) des Reinigungszylinders (36) und den Flanschabschnitt (35C) des vorgelagerten Zylinders (35), die einander zugewandt sind, und den nachgelagerten Flanschabschnitt (36C) des Reinigungszylinders (36) und den Flanschabschnitt (37B) des nachgelagerten Zylinders (37), die einander zugewandt sind, lösbar zu verbinden;
eine Öffnung (18A, 82), die an einer spezifizierten Position in dem Gegengewicht (12) bereitgestellt ist, um sich dort hindurch zu erstrecken;
ein erstes Stützelement (41), das an dem Fahrzeugkörper (11) fixiert und konfiguriert ist, um den vorgelagerten Zylinder (35) zu stützen;
ein Montagebasiselement (27, 87), das mit einem Bolzen (31, 88) an dem Fahrzeugkörper (11) befestigt ist; und
ein zweites Stützelement (45), von dem ein Ende an dem Montagebasiselement (27, 87) fixiert ist und von dem das andere Ende auf solche Weise an dem nachgelagerten Zylinder (37) fixiert ist, dass sich das eine Ende auf der nachgelagerten Seite eines Zylinderabschnitts (37A) des nachgelagerten Zylinders (37) in einer axialen Richtung der Abgasreinigungseinrichtung (21) befindet, um dadurch den nachgelagerten Zylinder (37) zu stützen,
wobei die Öffnung (18A, 82) von einer Größe ist, die Montage und Demontage des Paars der Klemmelemente (67) durch die Öffnung (18A, 82) ermöglicht und dem Reinigungszylinder (36) ermöglicht, dort hindurchzugehen, und nachdem der Bolzen (31, 88) gelockert wird, das Montagebasiselement (27, 88), das zweite Stützelement (45) und der nachgelagerte Zylinder (37) integral entlang einer axialen Richtung des Reinigungszylinders (36) verschiebbar sind.

2. Abgasreinigungseinrichtung (21) nach Anspruch 1, wobei
die Öffnung (18A) in einem oberen Teil des Gegengewichts (12) gebildet ist, um dem Reinigungszylinder (36) zugewandt zu sein, und
das Montagebasiselement (27, 87) von der oberen Seite des Fahrzeugkörpers (11) an einer Basis (28), die innerhalb des Gegengewichts (12) angeordnet ist, mit dem Bolzen (31, 88) durch die Öffnung (18A) lösbar befestigt ist und ein Langloch (47) aufweist, das in der axialen Richtung länger ist und durch das der Bolzen (31, 88) eingesetzt wird.

3. Abgasreinigungszylinder (21) nach Anspruch 1, wobei
die Öffnung (82) in einem hinteren Teil des Gegengewichts (12) gebildet ist, um dem Reinigungszylinder (36) zugewandt zu sein, und
die Montagestruktur der Abgasreinigungseinrichtung (21) eine Montageklammer (91) beinhaltet, die unterhalb des zweiten Stützelements (45) angeordnet ist und sich von dem Fahrzeugkörper (11) in Richtung der hinteren Seite erstreckt, und
das Montagebasiselement (87) mit dem Bolzen (31, 88) lösbar an der Montageklammer (91) befestigt ist und ein Durchgangsloch (89A) aufweist, durch das eine Führungswelle (92) eingesetzt wird, die sich in der axialen Richtung über eine vorbestimmte Länge von der Montageklammer (91) in Richtung einer äußeren Seite erstreckt

4. Abgasreinigungseinrichtung (21) nach einem der Ansprüche 1 bis 3, wobei
der Reinigungszylinder (36) einen Griff (36D) beinhaltet, der an einer äußeren Umfangsoberfläche des Reinigungszylinders (36) in der axialen Richtung an einer im Wesentlichen mittleren Position davon bereitgestellt ist, um sich in Richtung der oberen Seite des Fahrzeugkörpers (11) zu erstrecken.

5. Abgasreinigungseinrichtung (21) nach einem der Ansprüche 1 bis 4, wobei
jeder von dem vorgelagerten Flanschabschnitt (36B) und dem nachgelagerten Flanschabschnitt (36C) des Reinigungszylinders (36) oder jeder von dem Flanschabschnitt (35C) des vorgelagerten Zylinders (35) und dem Flanschabschnitt (37B) des nachgelagerten Zylinders (37) einen ringförmigen Einsatzrippenabschnitt (51) aufweist, der sich in der axialen Richtung in Richtung einer äußeren Seite über eine vorbestimmte Länge über die entsprechende Verbindungsoberfläche (35D, 36E, 36F, 37D) hinaus von der Verbindungsoberfläche (35D, 36E, 36F, 37D) über den gesamten Umfang des Einsatzrippenabschnitts (51) erstreckt, und
jeder von dem vorgelagerten Flanschabschnitt (36B) und dem nachgelagerten Flanschabschnitt (36C) des Reinigungszylinders (36) oder jeder von dem Flanschabschnitt (35C) des vorgelagerten Zylinders (35) und dem Flanschabschnitt (37B) des nachgelagerten Zylinders (37), je nachdem, welcher nicht den Einsatzrippenabschnitt (51) aufweist, eine Einsetznut (59) aufweist, die in einer Vorderansicht eine kreisförmige Form aufweist und an einer Position gebildet ist, die dem Einsatzrippenabschnitt (51) entspricht, und sich an den gesamten Umfang des Einsatzrippenabschnitts (51) anpasst, und der Einsatzrippenabschnitt (51) in die Einsetznut (59) eingesetzt wird.

## Revendications

1. Appareil de nettoyage de gaz d'échappement (21) comprenant :
un cylindre en amont (35) prévu dans un passage de gaz d'échappement (21, 22) d'un moteur (15) monté sur un corps de véhicule (11) ;
un cylindre en aval (37) disposé sur un côté en aval du cylindre en amont (35) ;
un cylindre de nettoyage (36) qui est raccordé en série, de manière amovible, entre et de manière coaxiale avec le cylindre en amont (35) et le cylindre en aval (37), le cylindre de nettoyage (36) logeant un élément de traitement de nettoyage (26) qui est configuré pour y faire passer le gaz d'échappement afin de nettoyer le gaz d'échappement, et
une structure de montage disposée dans un contrepoids (12) installé dans une partie arrière du corps de véhicule (11), dans lequel :
le cylindre en amont (35), le cylindre de nettoyage (36) et le cylindre en aval (37) ont chacun, au niveau de leur extrémité, une partie de bride (35C, 36B, 36C, 37B) ayant une surface de raccordement plate (35D, 36E, 36F, 37D) et le cylindre en amont (35), le cylindre de nettoyage (36) et le cylindre en aval (37) sont en contact entre eux et raccordés entre eux au niveau des surfaces de raccordement (35D, 36E, 36F, 37D), et
la structure de montage de l'appareil de nettoyage de gaz d'échappement (21) comprend :
une paire d'éléments de serrage (67) ayant chacun une rainure avec une section transversale en forme de U ou en forme de V et formée selon une forme annulaire de sorte que la rainure est orientée vers l'intérieur, les éléments de serrage (67) étant configurés pour tenir dans leurs rainures et raccorder, de manière pouvant se déconnecter, la partie de bride en amont (36B) du cylindre de nettoyage (36) et la partie de bride (35C) du cylindre en amont (35) qui se font face, et la partie de bride en aval (36C) du cylindre de nettoyage (36) et la partie de bride (37B) du cylindre en aval (37) qui se font face ;
une ouverture (18A, 82) prévue dans une position spécifiée dans le contrepoids (12) pour s'étendre à travers ce dernier ;
un premier élément de support (41) qui est fixé sur le corps de véhicule (11) et configuré pour supporter le cylindre en amont (35) ;
un élément de base de montage (27, 87) qui est fixé sur le corps de véhicule (11) avec un boulon (31, 88) ; et
un second élément de support (45), dont une extrémité est fixée sur l'élément de base de montage (27, 87) et dont l'autre extrémité est fixée au cylindre en aval (37) de sorte que la une extrémité est positionnée du côté en aval d'une partie de cylindre (37A) du cylindre en aval (37) dans une direction axiale de l'appareil de nettoyage de gaz d'échappement (21), afin de supporter ainsi le cylindre en aval (37),
dans lequel l'ouverture (18A, 82) a une taille qui permet le montage et le démontage de la paire d'éléments de serrage (67) à travers l'ouverture (18A, 82) et permet au cylindre de nettoyage (36) de passer à travers cette dernière, et après que le boulon (31, 88) a été desserré, l'élément de base de montage (27, 87), le second élément de support (45) et le cylindre en aval (37) peuvent coulisser, de manière solidaire le long d'une direction axiale du cylindre de nettoyage (36).

2. Appareil de nettoyage de gaz d'échappement (21) selon la revendication 1, dans lequel :
l'ouverture (18A) est formée dans une partie supérieure du contrepoids (12) afin de faire face au cylindre de nettoyage (36), et
l'élément de base de montage (27, 87) est fixé, de manière détachable, du côté supérieur du corps de véhicule (11) à une base (28) disposée dans le contrepoids (12) avec le boulon (31, 88) à travers l'ouverture (18A), et a un trou long (47) qui est plus long dans la direction axiale et à travers lequel le boulon (31, 88) est inséré.

3. Appareil de nettoyage de gaz d'échappement (21) selon la revendication 1, dans lequel :
l'ouverture (82) est formée dans une partie arrière du contrepoids (12) afin de faire face au cylindre de nettoyage (36),
la structure de montage de l'appareil de nettoyage de gaz d'échappement (21) comprend une console de montage (91) qui est disposée au-dessous du second élément de support (45) et s'étend vers le côté arrière à partir du corps de véhicule (11), et
l'élément de base de montage (87) est fixé, de manière détachable, sur la console de montage (91) avec le boulon (31, 88) et a un trou débouchant (89A) à travers lequel un arbre de guidage (92), qui s'étend à partir de la console de montage (91) vers un côté externe dans la direction axiale sur une longueur prédéterminée, est inséré.

4. Appareil de nettoyage de gaz d'échappement (21) selon l'une quelconque des revendications 1 à 3, dans lequel :
le cylindre de nettoyage (36) comprend une poignée (36D) qui est prévue sur une surface périphérique externe du cylindre de nettoyage (36) dans sa position sensiblement intermédiaire dans la direction axiale afin de s'étendre vers le côté supérieur du corps de véhicule (11).

5. Appareil de nettoyage de gaz d'échappement (21) selon l'une quelconque des revendications 1 à 4, dans lequel :
chacune parmi la partie de bride en amont (36B) et la partie de bride en aval (36C) du cylindre de nettoyage (36), ou chacune parmi la partie de bride (35C) du cylindre en amont (35) et la partie de bride (37B) du cylindre en aval (37), a une partie de nervure d'insertion de forme annulaire (51) qui s'étend vers un côté externe dans la direction axiale au-delà de la surface de raccordement (35D, 36E, 36F, 37D) correspondante sur une longueur prédéterminée sur toute la circonférence de la partie de nervure d'insertion (51) à partir de la surface de raccordement (35D, 36E, 36F, 37D), et
chacune parmi la partie de bride en amont (36B) et la partie de bride en aval (36C) du cylindre de nettoyage (36), ou chacune parmi la partie de bride (35C) du cylindre en amont (35) et la partie de bride (37B) du cylindre en aval (37), qui n'a pas de partie de nervure d'insertion (51), a une rainure d'insertion (59) qui a une forme annulaire sur une vue de face et est formée dans une position correspondant à la partie de nervure d'insertion (51) et se conformant à toute la circonférence de la partie de nervure d'insertion (51), et la partie de nervure d'insertion (51) est insérée dans la rainure d'insertion (59).
